(19) **Europäisches Patentamt / European Patent Office / Office européen des brevets**

(11) **EP 2 121 261 B1**

(12) **FASCICULE DE BREVET EUROPEEN**

(45) Date de publication et mention
de la délivrance du brevet:
**30.05.2018 Bulletin 2018/22**

(21) Numéro de dépôt: **07857983.6**

(22) Date de dépôt: **20.12.2007**

(51) Int Cl.:
**B29B 9/06** (2006.01)          **B29B 9/12** (2006.01)
**C08J 3/12** (2006.01)          **E21B 43/267** (2006.01)

(86) Numéro de dépôt international:
**PCT/EP2007/064364**

(87) Numéro de publication internationale:
**WO 2008/077895 (03.07.2008 Gazette 2008/27)**

(54) **PERLES DE POLYAMIDES ET PROCEDE DE FABRICATION DE CES PERLES**

POLYAMIDKÜGELCHEN UND VERFAHREN ZUR HERSTELLUNG DERARTIGER KÜGELCHEN

POLYAMIDE BEADS AND METHOD FOR PRODUCING SUCH BEADS

(84) Etats contractants désignés:
**AT BE BG CH CY CZ DE DK EE ES FI FR GB GR
HU IE IS IT LI LT LU LV MC MT NL PL PT RO SE
SI SK TR**

(30) Priorité: **22.12.2006 FR 0611260**

(43) Date de publication de la demande:
**25.11.2009 Bulletin 2009/48**

(73) Titulaires:
• **Rhodia Opérations
93306 Aubervilliers (FR)**
• **Gala Industries Inc
Eagle Rock, VA 24085 (US)**

(72) Inventeurs:
• **ESTUR, Jean-François
69230 Saint-Genis Laval (FR)**

• **ROCHE, Eric
38200 Luzinay (FR)**
• **ELOO, Michael
46509 Xanten (DE)**
• **DRUSCHEL, Berthold
46459 Rees (DE)**

(74) Mandataire: **Schuck, Alexander et al
Isenbruck Bösl Hörschler LLP
Patentanwälte
EASTSITE ONE
Seckenheimer Landstraße 4
68163 Mannheim (DE)**

(56) Documents cités:
**EP-A- 0 040 080          EP-A1- 0 866 088
FR-A- 1 577 285          FR-A1- 2 642 079
US-A- 4 863 646          US-A1- 2002 115 818
US-A1- 2006 151 170          US-B1- 6 232 436**

**Description**

La présente invention concerne des perles ou granulés en polyamide et un procédé de fabrication de ces perles ainsi que leur utilisation comme élément d'étayage des fissures souterraines naturelles ou artificielles de l'écorce terrestre utilisées notamment pour l'extraction des hydrocarbures tels que le pétrole ou le gaz naturel.

Elle concerne plus particulièrement des perles de faible diamètre présentant une forme régulière.

Les polymères thermoplastiques tels que les polyamides, sont des matériaux très importants pour la fabrication de nombreux articles utilisés dans de nombreux domaines.

Ces articles sont généralement obtenus par mise en forme à partir de polymère fondu dans des procédés de filage, extrusion, moulage, par exemple.

Généralement, la matière première utilisée pour réaliser ces articles, notamment pour alimenter les installations de mise en forme, est sous forme de granulés de polymère obtenus par coulée du polymère fondu en sortie des installations de polymérisation sous forme de jonc et coupe de ceux-ci en granulés de forme cylindrique. Ces granulés généralement de forme cylindrique ont une longueur de quelques millimètres.

Toutefois, pour certaines applications, il peut être avantageux d'utiliser des granulés de forme particulière, par exemple, sensiblement sphérique. De tels granulés sphériques seront appelés ci-après perles, et présentent notamment une meilleure coulabilité.

Depuis de nombreuses années, un procédé de granulation permet de produire des perles en matière thermoplastique. Ce procédé et l'appareil pour le mettre en oeuvre sont appelés un procédé ou dispositif de "coupe en tête noyée" et sont décrits, par exemple, dans les brevets US-B-6 232 436, US2918701 ou US3749539. L'utilisation de ce procédé est délicate notamment pour la fabrication de granulés ou de perles en polymère de point de fusion élevé, tels que les polyamides. En effet, avec ce type de polymère, les risques de solidification ou cristallisation du matériau dans les trous de filière sont élevés. Ainsi, si de nombreux trous de filière se trouvent obturés par du polymère solidifié ou cristallisé, l'installation devra être arrêtée pour les déboucher et au moins conserver une productivité acceptable.

De nombreux travaux et améliorations de l'installation de coupe en tête noyée ont été proposés pour diminuer ces risques. Toutefois, ces risques de bouchage des trous de filière dans le procédé de "coupe en tête noyée" ont pour conséquence une limite du domaine d'utilisation notamment pour la granulation des polymères de point de fusion élevé tels que les polyamides. Ainsi, pour diminuer le risque d'obturation des trous de filières avec des polymères de point de fusion élevé tels que les polyamides, les granulés ou perles produites sont d'un diamètre supérieur à 2 mm car la dimension des trous de filières doit être suffisamment importante pour avoir une masse de polymère dans les trous relativement élevée limitant le refroidissement et la solidification du matériau présent dans le trou.

Toutefois, certaines applications ou utilisations de perles en polymères thermoplastiques requièrent des perles de faibles tailles ou diamètres, notamment l'utilisation des perles polyamides comme élément d'étayage des fissures souterraines naturelles ou artificielles de l'écorce terrestre dans les installations d'extraction des hydrocarbures comme décrites dans le brevet US2006/0151170, par exemple.

Le document FR-A-2 642 079 décrit quant à lui un procédé pour la préparation d'une poudre comprenant des particules pratiquement sphériques d'un composé polymère polymérisable en phase solide, tel qu'un polyamide. Le procédé comprend les étapes de mélange séparé de deux ou plus de deux oligomères et/ou monomères qui sont réactifs l'un avec l'autre, atomisation d'un mélange des oligomères et/ou monomères tout en les mélangeant constamment l'un avec l'autre, puis refroidissement du mélange atomisé pour l'obtention d'une poudre de celui-ci, et polymérisation en phase solide de ce mélange pour obtenir la poudre de polymère. Cette poudre est utilisable pour le poudrage (ou revêtement d'articles à l'aide d'une poudre).

Un des buts de la présente invention est de proposer des perles de polyamide de faible dimension et un procédé utilisant un dispositif de coupe en tête noyée permettant de produire de telles perles sans les inconvénients des installations et procédés connus.

A cet effet, l'invention propose des perles de polyamide de forme sphérique ou ellipsoïdale dont la surface ne comprend pas de partie concave, avantageusement de forme régulière, caractérisées en ce qu'elles présentent un diamètre moyen compris entre 0,5 et 1,7 mm et une porosité inférieure à 0,1 ml/g, mesurée selon la méthode de mesure de porosité au mercure à l'aide d'un porosimètre à mercure MICROMERITICS AutoPore IV selon la norme ASTM Standards of catalysts D 4284-83.

Selon l'invention, on entend par diamètre moyen D, le diamètre déterminé par la mesure de la masse P d'un échantillon statistique de 100 perles. Le diamètre D est donné par la formule (I) suivante :

$$D = [(P * 6)/(100 * M_v * \pi)]^{1/3} \quad (I)$$

Dans laquelle :

- P représente la masse en gramme d'un échantillon de 100 perles ou granulés
- $M_v$ représente la masse volumique du matériau formant les perles

La masse volumique $M_v$ est déterminée selon la méthode suivante :

Le volume des perles est estimé par déplacement d'eau selon le protocole suivant :

Une fiole conique jaugée de volume adapté à la taille des perles est remplie d'eau jusqu'au bord du col, ce qui correspond à un volume $V_1$ d'eau. La masse de l'ensemble fiole+eau est mesurée, on la note $M_1$. L'eau de la fiole est évacuée. La fiole est remplie par une masse m1 déterminée de perles. La fiole est à nouveau remplie d'eau jusqu'au bord du col. La masse de l'ensemble fiole+eau+perle est mesurée, elle est notée $M_2$. La masse volumique de la perle est alors calculée par la formule II suivante :

$$Mv = m_1/(m_1 - (M_2 - M_1)) * V_0 \quad (II)$$

dans laquelle $V_0$ représente la masse volumique de l'eau en g/cm³

Les perles de l'invention ont une forme régulière ne présentant pas de partie concave. Par cette caractéristique, il est indiqué que l'enveloppe fictive de la perle ne comprend pas de partie concave. Toutefois, sans sortir du cadre de l'invention, la surface de la perle peut comprendre des petites aspérités ou petites cavités formant des irrégularités sur la surface de la perle telles que les défauts générés par des bulles de gaz, par exemple.

Les perles de l'invention sont obtenues à partir d'une résine polyamide ou d'un matériau comprenant comme matrice polymérique une résine polyamide et des charges ou additifs.

Les résines polyamides et matériaux convenables pour l'invention présentent avantageusement des propriétés mécaniques et de résistance chimique élevées, avantageusement compatibles pour l'utilisation des perles comme élément d'étayage dans les puits d'extraction d'hydrocarbures.

Selon l'invention, la résine polyamide utilisée pour la fabrication des perles est choisi parmi les polymères thermoplastiques polyamides de point de fusion élevé, avantageusement ceux présentant une température de fusion supérieure à 200°C, tels que les polyamides 6-6, polyamide 6, copolyamides 66/6 copolyamides 6/66, les copolyamides comprenant au moins 80% en poids de motifs polyamide 6, ou au moins 80% de motifs polyamide 66, les polyamides semiaromatiques tels que ceux commercialisés sous les dénominations commerciales AMODEL ou NYLON HTN, le polyamide T6, le polyamide 4,6.

Avantageusement, les matériaux utilisés comprennent une matrice polyamide et des charges de renfort et/ou de remplissage additionnées aux polymères thermoplastiques. La concentration de ces charges de renfort et/ou de remplissage peut varier dans de grandes limites. Cette concentration est avantageusement comprise entre 5% et 90% en poids par rapport à la masse de matériau final.

Ces charges de renfort et/ou de remplissage peuvent être choisies dans le groupe comprenant les fibres telles que les fibres de verre, fibres d'aramide, fibres céramique, fibres en matériau thermodurcissables; les billes en céramique ou en verre, les charges minérales sous forme de poudre telles que les argiles, le kaolin, le talc, la silice, l'aluminium, les tamis moléculaires, les charges ou fibres naturelles telles que les fibres de jute, noix de coco broyées ou analogues.

Les matériaux peuvent également contenir des additifs modifiant certaines propriétés tels que des plastifiants, des additifs de stabilisation à l'oxydation, des stabilisants chaleur et/ou lumière, des pigments, des colorants, des matifiants, des ignifugeants, des agents de réticulation ou analogues. Selon une caractéristique préférée de l'invention, les perles de polyamide ont un diamètre moyen compris entre 0,8 mm et 1,5 mm, préférentiellement entre 0,9 et 1,3 mm.

Les perles de polyamide décrites ci-dessus peuvent être utilisées dans de nombreuses applications telles que les procédés de fabrication d'articles moulés ou injectés. Ces perles peuvent également être utilisées telles quelles comme moyen de remplissage, et préférentiellement comme moyens d'étayage des fractures et fissures souterraines naturelles ou générées artificiellement dans les puits d'extraction du pétrole et du gaz naturel notamment. Ainsi, ces perles de polyamide sont entraînées dans les fissures souterraines par différentes techniques décrites, par exemple, dans les brevets US3659651, US7128118, US2006/0151170, US2006/0065398.

Selon un autre objet de l'invention, les perles de polyamide de l'invention sont produites par un procédé de fabrication de perles utilisant un dispositif de coupe en tête noyée d'un polymère à l'état fondu.

Les dispositifs de coupe en tête noyée pour la fabrication de granulés sensiblement sphériques à partir de polymère fondu sont connus depuis très longtemps. A titre d'exemple, on peut citer les brevets US2918701 et US3749539. Par ailleurs, US2005/0035483 décrit un procédé et un dispositif de coupe en tête noyée permettant de diminuer les problèmes générés par l'alimentation de polymères de point de fusion élevé et à vitesse de cristallisation élevée tels que les polyamides. En effet, avec de tels polymères les risques de cristallisation du polymère dans les trous de filière sont élevés. Ce document décrit une solution consistant à équiper la filière avec des moyens de chauffage du polymère au niveau du trou de filière. Ce document décrit la fabrication de granulés sphériques en polyamide présentant un diamètre supérieur à 3 mm correspondant à un poids de 100 granulés compris entre 2,5 et 4,3 g.

Le procédé de l'invention consiste à mettre en oeuvre des conditions de fonctionnement et d'alimentation de dispositif de coupe en tête noyée permettant d'obtenir des perles présentant un diamètre moyen inférieur à 1,7 mm avec un risque minimal de bouchage des trous de filière compatible avec une production industrielle de perles en polyamide.

Le procédé de l'invention consiste à introduire le polyamide ou une composition à base de polyamide dans un dispositif de granulation à coupe en tête noyée comprenant une filière munie de trous dont le diamètre est compris entre 0,3 mm et 1,7 mm, la température du liquide de refroidissement est comprise entre 70°C et 100°C. Le polyamide ou la composition est alimentée dans les trous de filière sous une pression comprise entre 70 bars et 250 bars. Selon l'invention, au démarrage du procédé de coupe en-tête, la pression d'alimentation du polymère dans les trous de filière est établie à au moins 80% de sa valeur nominale indiquée ci-dessus en un temps très court, inférieur à 5 secondes, préférentiellement inférieur à 3 secondes. En outre, cette pression est maintenue sensiblement stable au cours du procédé de granulation.

Selon un mode préférentiel de l'invention et pour établir et obtenir rapidement une pression d'alimentation au démarrage du procédé de granulation, l'alimentation du polyamide ou de la composition est réalisée par l'utilisation en série d'un dispositif à simple ou double vis et d'une pompe à engrenage. En effet, une telle disposition et notamment l'utilisation d'une pompe à engrenage permet d'alimenter le polyamide fondu dans les trous filière selon un débit constant qui est avantageusement compris entre 3 et 15 kg par trou et par heure, préférentiellement entre 5 et 12 kg par trou et par heure. La pompe à engrenage est citée à titre d'exemple comme dispositif convenable pour établir rapidement une pression d'alimentation du polymère au démarrage de l'alimentation du polymère fondu dans la filière du procédé de granulation. Toutefois, sans pour cela sortir du cadre de l'invention, il est possible d'utiliser d'autres moyens ou dispositifs permettant d'obtenir un résultat semblable ou identique.

Les dispositifs de granulation en coupe de tête noyée comprennent généralement et avantageusement une vanne entre la filière et la sortie du dispositif d'alimentation du polymère fondu, dans le cas présent la sortie de la pompe d'engrenage. Ainsi, au démarrage de l'installation et pendant la mise en température des différents appareils, le polymère fondu sortant de la pompe à engrenage est dirigée par la dite vanne vers un récipient de récupération. Après stabilisation des températures, la vanne est actionnée pour alimenter dans les trous de filière avec le polymère fondu, le dispositif de coupe étant mis en marche simultanément.

Selon encore une autre caractéristique du procédé de l'invention, la vitesse de rotation du couteau ou dispositif de coupe à la surface immergée de la filière est déterminée pour obtenir les perles de diamètre désiré, et est avantageusement comprise entre 3000 et 6000 tours par minute. Les perles de polyamide ainsi produites sont récupérées par tout moyen connu, notamment par centrifugation, décantation ou filtration. Les perles ainsi récupérées sont ensuite avantageusement séchées. Elles peuvent également être soumises à des traitements pour modifier certaines de leurs propriétés telles que l'amélioration des propriétés mécaniques par un traitement thermique ou un traitement par un rayonnement pour provoquer l'augmentation de la masse moléculaire du polymère et/ou son degré de réticulation. Il est également décrit un dispositif pour mettre en oeuvre le procédé de fabrication tel que mentionné précédemment, comprenant un dispositif de granulation à coupe en tête noyée comprenant au moins :

- un moyen de coupe avec une filière des trous de filière ayant un diamètre compris entre 0,3 mm et 1,7 mm,
- un moyen d'alimentation sous pression du polyamide ou de la composition à base de polyamide jusqu'au moyen de coupe, la tête de coupe, à travers les trous de filière, comprenant des moyens de control de la pression de façon à ce que le polyamide ou la composition de polyamide est alimentée dans la filière avec établissement d'au moins 80% de la pression nominale d'alimentation dans une durée égale au plus à 5 secondes après le début de l'alimentation des trous de filière avec le polymère ou matériau fondu,
- un circuit de fluide comprenant des moyens de control de la température du liquide de refroidissement à une température comprise entre 70°C et 100°C.

Comme explicité précédemment, le moyen d'alimentation comprend préférentiellement une extrudeuse à simple ou double vis combinée avec une pompe à engrenage. Le moyen d'alimentation comprend avantageusement un moyen de control du débit du polyamide dans la filière permettant d'obtenir un débit compris entre 3 et 15 kg/H et par trou, préférentiellement entre 5 et 12 kg/H et par trou.

Le moyen de coupe comprend préférentiellement un couteau rotatif entraîné par un entraînement rotatif à une vitesse de rotation entre 3000 et 6000 tr/min.

Comme indiqué précédemment, ces perles sont convenables pour être utilisées comme moyens d'étayage des fissures souterraines dans les dispositifs et installations d'extraction du pétrole ou du gaz.

En effet, ces perles présentent des propriétés mécaniques, notamment de résistance à l'écrasement ainsi que des propriétés de résistance chimique convenables pour cette application.

D'autres avantages, détails de l'invention apparaîtront plus clairement au vu des exemples donnés ci-dessous, uniquement à titre d'illustration.

**PARTIE EXPERIMENTALE**

**Exemple 1**

Un polyamide de type 66 commercialisé par la société RHODIA sous la dénomination commerciale STABAMID 27 AE1 présente un indice de viscosité IV égal à 136 (mesure à 25°C dans un viscosimètre de type Hubbelhode d'une solution à 5 g/l de polymère dissous dans un mélange composé de 90% en poids d'acide formique et de 10% en poids d'eau) et une température de fusion de 263°C (déterminée par la méthode DSC).

Ce polymère est fondu à une température de 308 °C au moyen d'une extrudeuse bi-vis, de diamètre 50 mm commercialisé par la société Leistriz et est alimenté dans une pompe à engrenage commercialisé par la société Maag. Cette pompe à engrenage alimente un dispositif de coupe en tête noyée commercialisée par la société GALA sous la dénomination commerciale A5 PAC 6 à une pression matière de 169 bars. La filière de ce dispositif de coupe en tête noyée possède 32 trous de 0.8 mm de diamètre. La filière est chauffée à une température de 345 °C. Le dispositif comprend un porte-couteaux équipé de 16 lames qui tourne dans la chambre de coupe à une vitesse de 5000 tr/min. Dans cette même chambre de coupe, une eau à 76°C circule avec un débit de 22 m3/H. Dans ces conditions le procédé permet de produire, pour un débit de polymère dans les trous de la filière égal à 170 kg/H avec un débit par trou de 5 kg/H, des particules sensiblement sphériques de diamètre équivalent à 1.4 mm.

### Exemple 2

Un co-polyamide 66/6 comprenant 40% en poids de kaolin comme charges minérales est fondu à une température de 329 °C au moyen d'une extrudeuse bi-vis, de diamètre de 50 mm commercialisée par la société Leistriz, qui alimente une pompe à engrenage commercialisée par la société Maag. Cette pompe à engrenage alimente un dispositif de coupe en tête noyée identique à celui de l'exemple 1 sous une pression de 91 bars, pression observée 3 secondes après l'alimentation du polymère dans la filière. La filière de cette coupe en tête noyée possède 72 trous de 1.2 mm et est chauffée à une température de 369 °C. Un porte couteaux équipé de 16 lames tourne dans la chambre de coupe à une vitesse de 4500 tr/min. Dans cette même chambre de coupe une eau à 89°C circule à un débit de 11 m3/H. Dans ces conditions sont obtenues, pour un débit d'extrusion de 420 kg/H des particules sensiblement sphériques de diamètre équivalent à 1.5 mm.

### Exemple 3

Un co-polyamide 6/ 66 comprenant 40% de charge minérale constituée par du kaolin est fondu à une température de 333°C au moyen d'une extrudeuse bi-vis identique à celle des exemples 1 et 2 qui alimente une pompe à engrenage identique à celle des exemples 1 ou 2. Cette pompe à engrenage alimente un dispositif de coupe en tête noyée identique à celui de l'exemple 1 ou 2 sous une pression d'alimentation de 135 bars. La filière de ce dispositif de coupe en tête noyée possède 80 trous de 1 mm de diamètre et est chauffée à une température de 389 °C. Un porte-couteaux équipé de 16 lames tourne dans la chambre de coupe à une vitesse de 5000 tr/min. Dans cette même chambre de coupe une eau à 92°C circule à un débit de 20 m3/H. Dans ces conditions sont obtenues, pour un débit d'extrusion de 400 kg/H des particules de diamètre équivalent à 1.25 mm.

## Revendications

1. Perles en polyamide de forme sphérique ou ellipsoïdale dont la surface ne comprend pas de partie concave, **caractérisées en ce qu'**elles présentent un diamètre moyen compris entre 0,5 et 1,7 mm et une porosité mesurée selon la méthode de mesure de porosité au mercure inférieure à 0,1 ml/g, mesurée selon la méthode de mesure de porosité au mercure à l'aide d'un porosimètre à mercure MICROMERITICS AutoPore IV selon la norme ASTM Standards of catalysts D 4284-83.

2. Perles selon la revendication 1, **caractérisées en ce que** le polyamide comprend une charge de renfort et/ou une charge de remplissage.

3. Perles selon la revendication 2, **caractérisées en ce que** la concentration pondérale en charges de renfort et/ou de remplissage est comprise entre 5% et 90%.

4. Perles selon l'une des revendications 1 à 3, **caractérisées en ce que** le diamètre moyen est compris entre 0,8 mm et 1,5 mm avantageusement entre 0,9 mm et 1,3 mm.

5. Perles selon l'une des revendications 2 à 4, **caractérisées en ce que** les charges de renfort et/ou de remplissage sont choisies dans le groupe comprenant, les fibres de verre, les fibres d'aramide, les fibres de céramique, les fibres minérales, les argiles, le kaolin, la silice, l'alumine, les tamis moléculaires, les billes de verre, les billes de céramique, les charges et fibres végétales.

6. Perles selon l'une des revendications 1 à 5, **caractérisées en ce que** le polyamide est choisi dans le groupe comprenant le polyamide 6, le polyamide 6,6, le polyamide T6, le polyamide 4,6, les copolyamides de ces polyamides, les polyamides semiaromatiques semicristallins.

7. Perles selon la revendication 6, **caractérisées en ce que** le polyamide est un polyamide 66 ou un co-polyamide 6,6/6.

8. Perles selon l'une des revendications précédentes, **caractérisées en ce que** le polyamide contient des additifs choisis dans le groupe comprenant les additifs de stabilisation à l'oxydation, à la lumière, les pigments, colorants, matifiants, les ignifugeants, les plastifiants, les agents réticulants.

9. Procédé de fabrication de perles en polyamide selon l'une des revendication précédentes, consistant à introduire le polyamide ou la composition à base de polyamide dans un dispositif de granulation à coupe en tête noyée, **caractérisé en ce que** le diamètre des trous de filière est compris entre 0,3 mm et 1,7 mm, la température du liquide de refroidissement est comprise entre 70°C et 100°C, et **en ce que** le polyamide ou la composition de polyamide est alimentée dans la filière avec établissement d'au moins 80% de la pression nominale d'alimentation dans une durée égale au plus à 5 secondes après le début de l'alimentation des trous de filière avec le polymère ou matériau fondu.

10. Procédé selon la revendication 9, **caractérisé en ce que** le polyamide ou composition de polyamide alimente le dispositif de granulation en tête noyée au moyen d'un dispositif d'alimentation comprenant une extrudeuse à simple ou double vis combinée avec une pompe à engrenage.

11. Procédé selon la revendication 9 ou 10, **caractérisé en ce que** le débit du polyamide dans la filière est compris entre 3 et 15 kg/H et par trou, préférentiellement entre 5 et 12 kg/H et par trou.

12. Procédé selon l'une des revendications 9 à 11, **caractérisé en ce que** la vitesse de rotation du dispositif de coupe du dispositif de granulation de coupe en tête noyée est comprise entre 3000 et 6000 tr/min.

13. Utilisation des perles de polyamide selon l'une des revendications 1 à 8 comme élément d'étayage des fractures souterraines de la terre dans l'extraction des hydrocarbures.


**Patentansprüche**

1. Polyamidkügelchen mit sphärischer oder ellipsoider Form, deren Oberfläche keinen konkaven Abschnitt umfasst, **dadurch gekennzeichnet, dass** sie einen mittleren Durchmesser zwischen 0,5 und 1,7 mm und eine nach dem Quecksilber-Porositätsmessverfahren mithilfe eines MICROMERITICS AutoPore IV-Quecksilber-Porosimeters gemäß der Norm ASTM Standards of catalysts D 4284-83 gemessene Porosität von weniger als 0,1 ml/g aufweisen.

2. Kügelchen nach Anspruch 1, **dadurch gekennzeichnet, dass** das Polyamid einen verstärkenden Füllstoff und/oder ein Füllmaterial umfasst.

3. Kügelchen nach Anspruch 2, **dadurch gekennzeichnet, dass** die Konzentration, bezogen auf Gewicht, an verstärkendem Füllstoff und/oder Füllmaterial zwischen 5% und 90% beträgt.

4. Kügelchen nach einem der Ansprüche 1 bis 3, **dadurch gekennzeichnet, dass** der mittlere Durchmesser zwischen 0,8 mm und 1,5 mm, vorteilhafterweise zwischen 0,9 mm und 1,3 mm beträgt.

5. Kügelchen nach einem der Ansprüche 2 bis 4, **dadurch gekennzeichnet, dass** der verstärkende Füllstoff und/oder das Füllmaterial aus der Gruppe ausgewählt sind, die Glasfasern, Aramidfasern, Keramikfasern, Mineralstofffasern, Tone, Kaolin, Siliziumdioxid, Aluminiumoxid, Molekularsiebe, Glasperlen, Keramikperlen, pflanzliche Füllstoffe und Fasern umfasst.

6. Kügelchen nach einem der Ansprüche 1 bis 5, **dadurch gekennzeichnet, dass** das Polyamid aus der Gruppe ausgewählt ist, die Polyamid 6, Polyamid 6,6, Polyamid T6, Polyamid 4,6, Copolyamide dieser Polyamide, semiaromatische semikristalline Polyamide umfasst.

7. Kügelchen nach Anspruch 6, **dadurch gekennzeichnet, dass** das Polyamid ein Polyamid 66 oder ein Copolyamid 6,6/6 ist.

8. Kügelchen nach einem der vorhergehenden Ansprüche, **dadurch gekennzeichnet, dass** das Polyamid Additive enthält, die aus der Oxidations-, Lichtstabilisierungsadditive, Pigmente, Farbstoffe, Mattierungsmittel, Flammschutzmittel, Weichmacher, Vernetzungsmittel umfassenden Gruppe ausgewählt sind.

9. Verfahren zur Herstellung von Polyamidkügelchen nach einem der vorhergehenden Ansprüche, bei dem man das Polyamid oder die Zusammensetzung auf der Basis von Polyamid in eine Unterwassergranulierungs-/-Schneidevorrichtung einbringt, die Spinndüsen mit einem Durchmesser zwischen 0,3 mm und 1,7 mm umfasst, **dadurch gekennzeichnet, dass** die Temperatur der Kühlflüssigkeit zwischen 70°C und 100°C beträgt, und dadurch, dass das Polyamid oder die Polyamidzusammensetzung in die Düse bei Erreichen von mindestens 80% des nominalen Beschickungsdrucks in einem Zeitraum von höchstens gleich 5 Sekunden nach dem Beginn der Beschickung der Spinndüsen mit dem schmelzflüssigen Polymer oder Werkstoff beschickt wird.

10. Verfahren nach Anspruch 9, **dadurch gekennzeichnet, dass** das Polyamid oder die Polyamidzusammensetzung die Unterwassergranulierungsvorrichtung mithilfe einer Beschickungsvorrichtung beschickt, die einen Einzelschnecken- oder Doppelschneckenextruder in Kombination mit einer Zahnradpumpe umfasst.

11. Verfahren nach Anspruch 9 oder 10, **dadurch gekennzeichnet, dass** der Durchsatz des Polyamids in der Düse zwischen 3 und 15 kg/h und pro Düse, vorzugsweise zwischen 5 und 12 kg/h und pro Düse beträgt.

12. Verfahren nach einem der Ansprüche 9 bis 11, **dadurch gekennzeichnet, dass** die Rotationsgeschwindigkeit der Schneidevorrichtung der Unterwassergranulierungs-/-Schneidevorrichtung zwischen 3000 und 6000 U/min beträgt.

13. Verwendung von Polyamidkügelchen nach einem der Ansprüche 1 bis 8 als Abstützelement von unterirdischen Rissen bei der Förderung von Kohlenwasserstoffen.


**Claims**

1. Polyamide beads of spherical or ellipsoidal shape, the surface of which does not comprise concave portions, **characterized in that** they have an average diameter comprises between 0.5 and 1.7 mm and a porosity measured according to the mercury porosity measurement method of less than 0.1 ml/g, measured according to the mercury porosity measurement method using a MICROMERITICS AutoPore IV mercury porosimeter according to the standard ASTM Standards of catalysts D 4284-83.

2. Beads according to Claim 1, **characterized in that** the polyamide comprises a reinforcing filler and/or a bulking filler.

3. Beads according to Claim 2, **characterized in that** the weight concentration of reinforcing and/or bulking fillers is between 5% and 90%.

4. Beads according to one of Claims 1 to 3, **characterized in that** the average diameter is between 0.8 mm and 1.5 mm, advantageously between 0.9 mm and 1.3 mm.

5. Beads according to one of Claims 2 to 4, **characterized in that** the reinforcing and/or bulking fillers are chosen from the group comprising glass fibres, aramid fibres, ceramic fibres, mineral fibres, clays, kaolin, silica, alumina, molecular sieves, glass beads, ceramic beads, fillers and plant fibres.

6. Beads according to one of Claims 1 to 5, **characterized in that** the polyamide is chosen from the group comprising polyamide 6, polyamide 6,6, polyamide T6, polyamide 4,6, copolyamides of these polyamides and semicrystalline semiaromatic polyamides.

7. Beads according to Claim 6, **characterized in that** the polyamide is a polyamide 66 or a copolyamide 6,6/6.

8. Beads according to one of the preceding claims, **characterized in that** the polyamide contains additives chosen from the group comprising additives for stabilization to oxidation and to light, pigments, dyes, mattifying agents, flame retardants, plasticizers and crosslinking agents.

9. Method of manufacturing polyamide beads according to one of the preceding claims, consisting in introducing the polyamide or the polyamide-based composition into a granulating device having an underwater pelletizer comprising die holes whose diameter is between 0.3 mm and 1.7 mm, **characterized in that** the temperature of the cooling liquid is between 70°C and 100°C, and **in that** the polyamide or the polyamide composition is fed into the die with establishment of at least 80% of the nominal feed pressure no later than 5 seconds after the start of feeding the die holes with the molten polymer or material.

10. Method according to Claim 9, **characterized in that** the polyamide or polyamide composition feeds the underwater granulating device by means of a feed device comprising a single-screw or twin-screw extruder combined with a gear pump.

11. Method according to Claim 9 or 10, **characterized in that** the throughput of the polyamide in the die is between 3 and 15 kg/h per hole, preferably between 5 and 12 kg/h per hole.

12. Method according to one of Claims 9 to 11, **characterized in that** the rotational speed of the cutting device of the underwater pelletizer granulating device is between 3000 and 6000 rpm.

13. Use of the polyamide beads according to one of Claims 1 to 8 as a proppant for underground cracks of the earth in the extraction of hydrocarbons.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6232436 B
- US 2918701 A
- US 3749539 A
- US 20060151170 A
- FR 2642079 A
- US 3659651 A
- US 7128118 B
- US 20060065398 A
- US 20050035483 A